# EUROPÄISCHE PATENTANMELDUNG

(11) **EP 0 791 759 A1**
(43) Veröffentlichungstag der Anmeldung: **27.08.1997**
(21) Anmeldenummer: 97102507.7
(22) Anmeldetag: 17.02.1997
(51) Int. Cl.: F16B 21/07, F16B 5/10

(54) **Schnellverschluss**

(30) Priorität: 24.02.1996 DE 29603389 U
(71) Anmelder: Schwarz Verbindungs-Systeme GmbH, 75382 Althengstett (DE)
(72) Erfinder: Schwarz, Helmut, 71263 Weil der Stadt (DE)
(74) Vertreter: Brügel, Gerhard

(57) **Zusammenfassung**

Schnellverschluß zum Verbinden von mit Bohrungen (3, 4) versehenen Teilen (1, 2), der aus einem Bolzen mit Kerben (12) und einer Haltefeder (5) besteht. Die Verbindung wird dadurch hergestellt, daß die Kerben (12) des Bolzens in die federnden Enden der Haltefeder (5) eingeschoben werden. Die Verbindung wird durch Drehen des Bolzens gelöst.

Der Bolzen besteht aus zwei gegeneinander unverdrehbar ineinander gesteckten Teilen (Kerbenteil (10,31), Kopfteil (11,32)), die wenigstens an einem Teil ihrer Berührungsflächen derart ausgebildet sind, daß zwar ein Ineinanderschieben möglich, ein Auseinanderziehen aber nicht mehr möglich ist.

## Beschreibung

Die Erfindung betrifft einen Schnellverschluß zum Verbinden von mit Bohrungen versehenen Teilen, der aus einem Bolzen mit zwei gegenüberliegenden Kerben und einer Haltefeder besteht, wobei die Verbindung dadurch herstellbar ist, daß die Kerben des Bolzens in die federnden Enden der Haltefeder eingeschoben und die Verbindung dadurch lösbar ist, daß der Bolzen gedreht wird.

Derartige Schnellverschlüsse, auch Verbindungselemente oder Verbindungseinrichtungen genannt, sind bekannt durch GB 1 465 262, DE 22 00 044, DE 33 03 254 A1, DE 35 11 070 C2 oder DE 41 09 902 A1. Sie werden oft im Fahrzeug- und Flugzeugbau verwendet, beispielsweise um eine Innenverkleidung an einem Rahmenteil, oder zwei Platten miteinander zu verbinden. Solche Schnellverschlüsse haben gegenüber Schraubverbindungen den Vorteil, daß sie nur eingedrückt werden müssen und durch eine Drehbewegung um ca 90° schnell gelöst werden können. Das leichte Lösen ist erwünscht, um Innenverkleidungen auszuwechseln oder hinter den Innenverkleidungen Wartungsarbeiten auszuführen. Die Länge der bei diesen bekannten Schnellverschlüssen verwendeten Bolzen muß entsprechend der Dicke der zu verbindenden Teile bemessen sein.

Von der Firma DZUS wurden 1983 sog. Verschlußzapfen angeboten, die zum Verbinden zweier Platten dienten. Zur Halterung eines Bolzens ist auch hier eine mit der unteren Platte verbundene Haltefeder vorgesehen. der Bolzen besteht aus Stahl und ist im unteren Bereich plättgedrückt und beidseitig mit mehreren Kerben versehen, in die die Enden der Feder eingreifen und damit den Bolzen in angepaßter Länge festhalten. Zwischen den zwei Platten ist über den Schaft des Bolzens eine Gummischeibe gelegt. Dieser Verschlußzapfen gestattet je nach Einschiebtiefe eine gewisse Längenanpassung, ist aber nicht zum Auswechseln geeignet, da der Bolzen auch bei Drehung um 90° nicht aus der Feder herausspringt.

In der DE 30 11 848 C2 ist ein Verschluß beschrieben, der aus einem drehbaren Bolzen mit Querstift besteht, der beim Verschließen über eine Kulisse gleitet und in der Schließstellung ähnlich wie bei einem Bajonettverschluß in zwei Vertiefungen einrastet. Die Position der Vertiefungen kann mit Hilfe eines Schraubenschlüssels auf einem Gewinde verdreht und damit in der Tiefe verstellt werden. Dadurch kann der Kopf des Bolzens mit der äußeren Oberfläche bündig eingestellt werden. Dieser Verschluß benutzt keine dreieckige Haltefeder. Zum Einstellen muß der Bolzen jeweils aus dem Verschluß herausgenommen werden.

Durch die DE 35 17 121 A1 ist ein Schnellverschluß mit Haltefeder bekannt bei dem durch eine spezielle Formgebung der Kerben im Bolzen erreicht werden soll, daß der Schnellverschluß Toleranzen ausgleicht. Dieser Toleranzausgleich ist jedoch äußerst klein, außerdem kann er größeren Kräften nicht standhalten.

Der im Anspruch 1 angegebenen Erfindung liegt das Problem zugrunde, die bekannten wieder lösbaren Schnellverschlüsse derart zu verbessern, daß deren Bolzen variable Längen aufweisen. Auf diese Weise kann ein und derselbe Schnellverschluß für Verbindungen unterschiedlicher Dicken verwendet werden. Außerdem können mit dem erfindungsgemäßen Schnellverschluß Maßungenauigkeiten, die z. B. Klappern verursachen können, ausgeglichen werden.

Dieses Problem wird durch die im Anspruch 1 aufgeführten Merkmale gelöst.

Ausführungsbeispiele der Erfindung sollen nachfolgend anhand der Figuren 1, 2a - 2c und 3a - 3b beschrieben werden. Die Fig. 1 zeigt in Explosionsdarstellung ein bevorzugtes Ausführungsbeispiel eines Schnellverschlusses, die Fig. 2a - 2c den gleichen Schnellverschluß in verschiedenen Einstellungen. Ein weiters Ausführungsbeispiel eines erfindungsgemäßen Bolzens für einen Schnellverschluß in perspektivischer Darstellung ist in den Fig. 3a und 3b gezeigt.

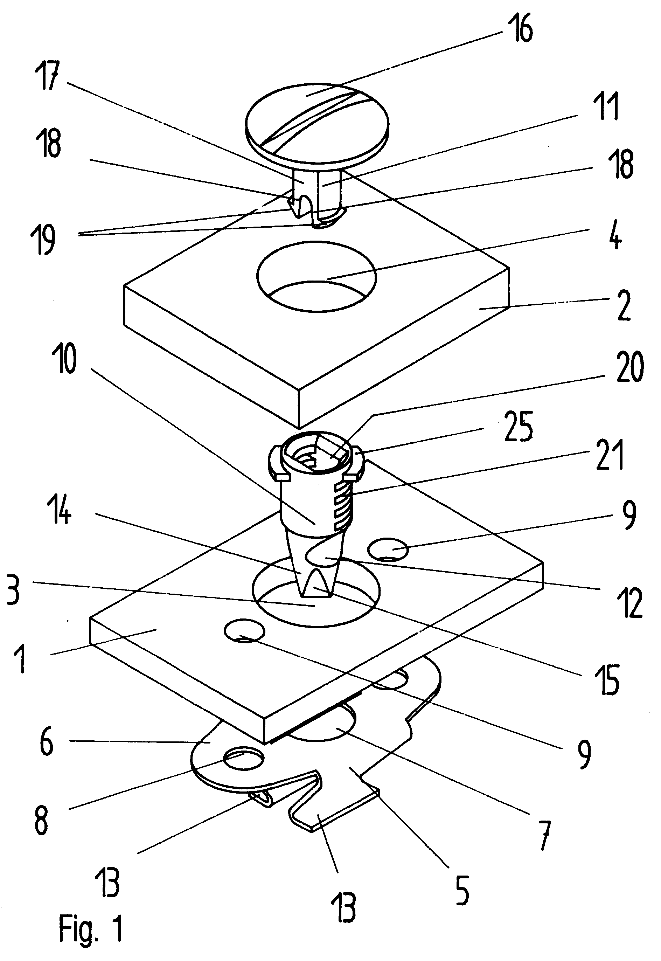

Der in Fig. 1 dargestellte Schnellverschluß dient zur Verbindung zweier Platten 1 und 2. Beide Platten 1 und 2 sind an der Verbindungsstelle mit Bohrungen 3 und 4 versehen, durch die der Schnellverschluß hindurchgesteckt ist. Als an sich bekanntes Halteteil wirkt eine im wesentlichen dreieckförmig gebogene Haltefeder 5, die im oberen Bereich 6 derart verbreitert ist, daß sie eine Bohrung 7 und zwei Löcher 8 aufnehmen kann. Die Haltefeder 5 wird mittels hier nicht dargestellter Nieten oder Schrauben, die durch die Löcher 8 und entsprechende Löcher 9 in der Platte 1 gesteckt sind, mit der Platte 1 fest verbunden.

Der beim Stand der Technik einteilige Bolzen ist gemäß der Erfindung zweiteilig. Er besteht aus einem unteren Kerbenteil 10 und einem oberen Kopfteil 11. Das Kerbenteil 10 weist zwei sich gegenüberliegende Kerben 12 auf, in die im eingedrückten Zustand die offenen Enden 13 der Haltefeder 5 eingreifen und damit den Bolzen 10, 11 festhalten. Das untere Ende des Kerbenteils 10 ist ein Konus 14, der beim Einschieben in die Haltefeder 5 die Enden 13 der Haltefeder 5 auseinanderdrückt. Die Flanken des Konus 14 sind in an sich bekannter Weise durch zwei symmetrisch zueinander gegenüber den Kerben 12 verdrehte ebene Leitflächen 15 abgeflacht. Die Leitflächen 15 bewirken beim Einstecken des Bolzens 10, 11 eine Drehung derart, daß die Enden 13 der Haltefeder 5 stets sicher in die Kerben 12 eingreifen. Das Prinzip der gegenüber den Kerben verdrehten Leitflächen 15 ist beispielsweise durch DE 33 03 254 A1 oder GB 1465 262 bekannt. Am oberen Rand des Kerbenteils 10 sind zwei diametral zueinander angeordnete Nasen 25 angeordnet, mit denen sich das Kerbenteil 10 am oberen Bereich 6 der Haltefeder 5 abstützt.

Das Kopfteil 11 besteht aus einem Kopf 16, der hier zur Betätigung mit einem Schraubendreher mit einem Schlitz versehen ist. Zur direkten Betätigung mit der Hand kann der Kopf auch mit einer Rändelung an seinem Rand und/oder einer aufgerauhten Oberfläche versehen sein. Der Schaft 17 des Kopfteiles 11, der in einen Hohlraum 20 des Kerbenteils 10 gesteckt ist, weist einen Querschnitt auf, der dem Querschnitt des Hohlraums 20 entspricht. Dadurch wird sichergestellt, daß beide Teile 10 und 11 nicht gegeneinander verdreht werden können. Im vorliegenden Fall sind diese Querschnitte O-förmig. Natürlich sind hier alle Querschnitte, die von der Kreisform abweichen, denkbar. Der Schaft 17 des Kopfteiles 11 läuft in zwei Fingern 18 aus, die an ihren Enden Zähne 19 mit in Einschiebrichtung abgeschrägten Flanken aufweisen.

In der Wandung des Kerbenteils 10 sind, den Zähnen 19 gegenüberliegend, übereinander mehrere Durchbrüche 21 vorgesehen. Wird das Kopfteil 11 in das Kerbenteil 10 eingeschoben, dann rasten die Zähne 19 vermöge der federnden Wirkung der Finger 18 in die Durchbrüche 21 ein.

Für die Montage der Verbindung gibt es unterschiedliche Methoden.

Der Bolzen, bestehend aus Kerbenteil 10 und Kopfteil 11 kann derart vormontiert werden, daß zunächst das Kopfteil 11 in das Kerbenteil 10 eingesteckt wird. Die in der Fig. 1 sichtbare Abschrägung des inneren oberen Randes des Hohlraumes 20 erleichtert das Einstecken des Kopfteiles 10. Der so vormontierte Bolzen wird in das Loch 4 der Platte 2 und das Loch 3 der Platte 1 eingesteckt bis sich die zwei Nasen 25 an der Öffnung 7 der Haltefeder 5 abstützen und die beiden Kerben 12 in die Enden der Haltefeder 5 einrasten. Die zwei Nasen 25 haben gegenüber einer ringförmigen Verbreiterung den Vorteil, daß sich der Bolzen leichter einsetzen läßt.

Für diese Art der Montage sollten die Parameter des Schnellverschlusses so bemessen sein, daß die Kraft, die aufzuwenden ist um den Bolzen 10, 11 in die Haltefeder 5 einzurasten kleiner ist als die Kraft, die nötig ist das Kopfteil 11 von Durchbruch zu Durchbruch in das Kerbenteil 10 einzuschieben. Keine Rolle spielt diese Bemessung der Parameter, wenn die Kräfte zum Einsetzen des vormontierten Bolzens 10, 11 direkt auf das Kerbenteil 10 wirken. Dies kann beispielsweise dadurch ermöglicht werden, daß das Kopfteil 11 in seiner Längsachse eine durchgehende Bohrung aufweist, durch die hindurch mittels eines Werkzeuges, beispielsweise eines Schraubendrehers, das Kerbenteil in Schließposition gebracht wird.

Bei der zweiten Montagemethode wird zunächst nur das Kerbenteil 10 in das Loch 3 der Platte 1 eingesetzt bis die Federenden 13 in die Kerben 12 einrasten und die Nasen 25 an der Oberkante der Haltefeder 5 anstoßen. Sodann wird die Platte 2 fluchtend auf das Kerbenteil 10 aufgesetzt.

In beiden Fällen wird durch weiteren Druck auf den Kopf 16 dann das Kopfteil 11 weiter soweit in das Kerbenteil 10 eingeschoben bis der Kopf an der Oberkante der Platte 2 anstößt. Die Zähne 19 haben sich dann in den zweiten, dritten oder vierten Durchbrüchen 21 verhakt. Die Gesamtlänge des Bolzens, bestehend aus Kopfteil 11 und Kerbenteil 10 paßt sich somit automatisch der Dicke der zu verbindenden Teile an.

Der Schnellverschluß wird dadurch geöffnet, daß Kopf 16 und damit Schaft 17 und Kerbenteil 10 derart gedreht werden, daß die Kerben 12 außer Eingriff mit den Enden 13 der Haltefeder 5 gelangen. Durch die Wirkung der Federenden 13 gleitet der Konus aus der Haltefeder 5.

Da es manchmal erwünscht ist, daß der Bolzen, bestehend aus Kopfteil 11 und Kerbenteil 10 mit der abgenommenen oberen Platte 2 verbunden bleiben soll, kann um den Bolzen in an sich bekannter Weise ein Ring aus elastischem Material, z.B. ein Gummiring, gelegt sein. Beim späteren Wiederherstellen der Verbindung wird der Bolzen 10, 11 in der Länge auf die er vorher eingestellt war, wieder in die Haltefeder 5 eingeschoben.

Wenn die Federkraft der Haltefeder 5 nicht ausreicht, den Bolzen 10, 11 beim Lösen der Verbindung nach oben zu drücken, kann in an sich bekannter Weise um den Bolzen 10, 11 eine Spiralfeder gelegt werde, die sich an der Bohrung 7 im oberen Bereich 6 der Haltefeder 5 und der Unterseite des Kopfes 16 abstützt.

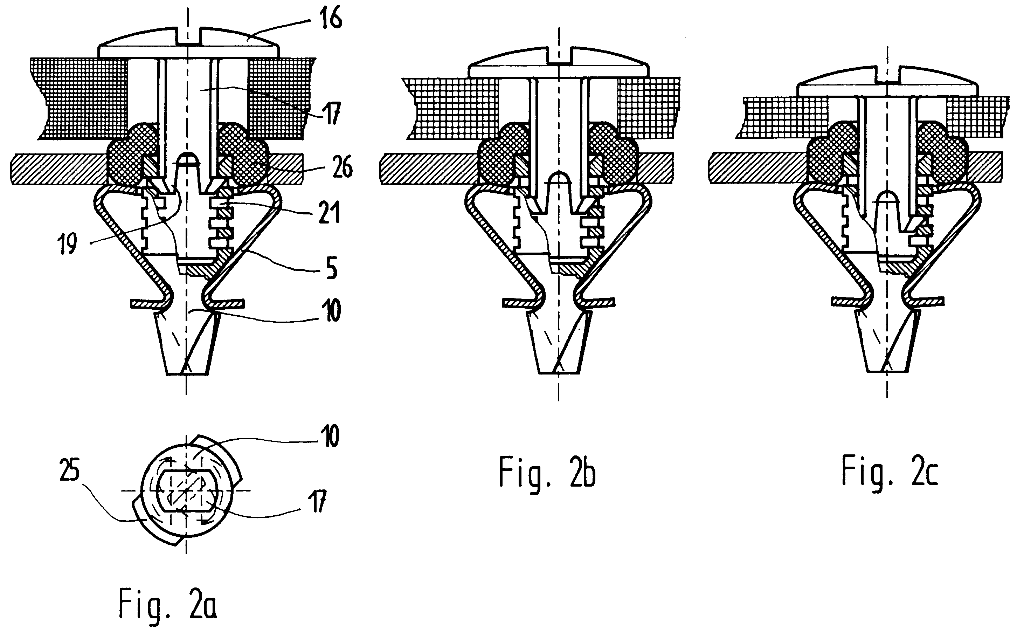

In den Fig. 2a - 2c ist der Schnellverschluß gemäß Fig. 1 in verschiedenen Längeneinstellungen dargestellt. Das Kerbenteil 10 ist hierbei teilweise aufgeschnitten, um das Zusammenwirken der Zähne 19 mit den Durchbrüchen 21 zu zeigen. Fig 2a zeigt unten den Schnitt durch das Kerbenteil 10 und den Schaft 17 des Kopfteiles 11. Das Kerbenteil 10 sollte nicht tiefer als in den Fig. 2a - 2c dargestellt in die Haltefeder eindringen können. Dies kann allein durch die breite Formgebung der Kerben 12 gewährleistet sein. Wie bereits oben beschrieben, können aber auch am Umfang des Kerbenteils 10 Nasen 25 vorgesehen sein, die sich an der Bohrung 7 der Haltefeder 5 abstützen.

Die Fig. 2a - 2c zeigen verschiedene Einstellungen der Länge des Bolzens 10, 11. Die Dicke der zu verbindenden Teile entspricht dem Abstand von der Unterkante des Kopfes 16 bis zur Oberkante der Haltefeder 5. In der Fig. 2a, in der die Zähne 19 in die obersten Durchbrüche 21 eingerastet sind, ist dieser Abstand beispielsweise 6 mm, in der Fig. 2b mit Einrastung in die zweiten Durchbrüche 21 4,8 mm und in Fig. 2c mit Einrastung in die vorletzten Durchbrüche 21 4,2 mm.

In den Fig. 2a bis 2c ist, wie bereits oben erwähnt, unterhalb der oberen Platte 2 um den aus Kopfteil 10 und Kerbenteil 11 bestehenden Bolzen ein Ring aus elastischem Material, z.B. ein Gummiring 26, gelegt, der bei der zeitweiligen Demontage der Platte 2 den Bolzen an der Platte 2 festhält.

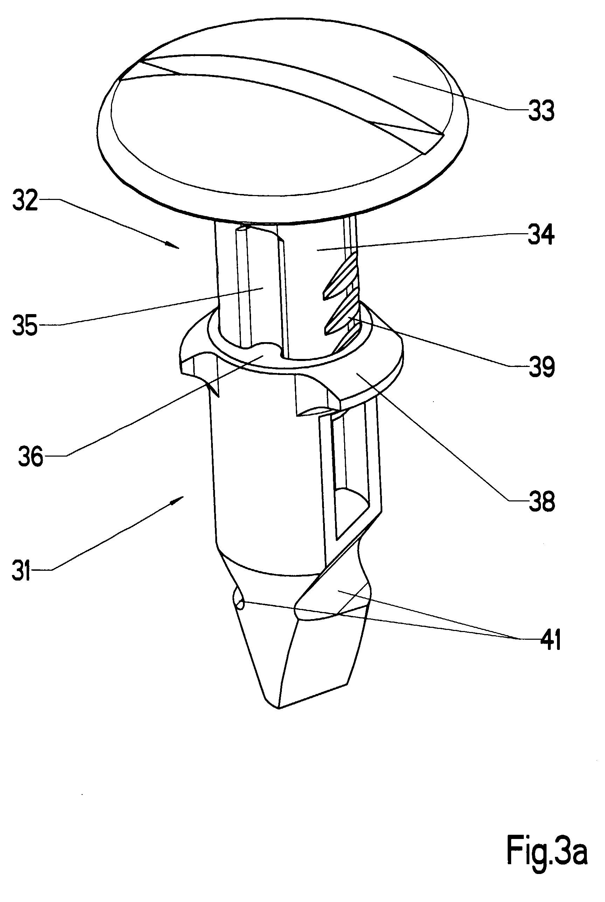

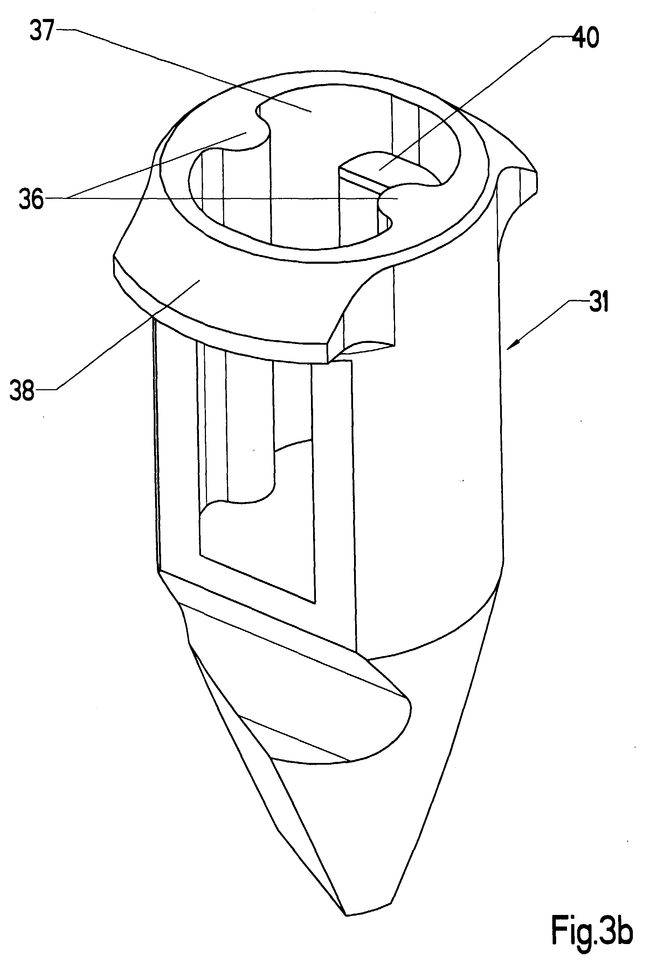

Ein weiteres Ausführungsbeispiel eines erfindungsgemäßen Bolzens der sich durch besondere Robustheit auszeichnet, ist in den Fig. 3a und 3b perspektivisch dargestellt. In Fig. 3a sind Kerbenteil 31 und Kopfteil 32 ineinander gesteckt dargestellt. Die Haltefeder fehlt in dieser Darstellung, da sie der Haltefeder 5 in Fig. 1 entspricht. In Fig. 3b ist das Kerbenteil 31 noch einmal dargestellt, da nicht alle seine Teile in Fig. 3a sichtbar sind. Das Kopfteil besteht aus einem Kopf 33, der hier wie ein Schraubenkopf ausgebildet ist. Der Schaft 34 des Kopfteiles 32 hat zwei an gegenüberliegenden Stellen angeordnete Führungsnuten 35, deren Querschnitte den Querschnitten zweier entsprechender Führungsrippen 36 in dem Hohlraum 37 des Kerbenteils 31 entsprechen. Die Teile 35 und 36 bewirken, daß Kopf- und Kerbenteil gegeneinander unverdrehbar ineinander geschoben werden können. In dem Schaft 34 des Kopfteiles sind mehrere sägezahnförmige Vertiefungen 39 hintereinander und symmetrisch zwischen den Nuten 35 eingeprägt. Die Sägezähne sind so geformt, daß die obere Flanke schräg zur Mantellinie verläuft und die untere Kante wenigstens nahezu in der Querschnittsebene liegt.

Der oberste Bereich des Kerbenteils 31 ist zu einem Rand 38 erweitert, der im eingebauten Zustand auf der Bohrung der Haltefeder aufsitzt. Wie Fig. 3a zeigt, ragen symmetrisch zwischen den Führungsrippen je eine Rastnase 40 in das Innere des Hohlraums 37 des Kerbenteils 31 hinein. Die Stellung der Rastnasen 40 entspricht der der Kerben 39, so daß die Rastnasen 40 beim Ineinanderschieben des Kopfteils 31 in den Hohlraum 37 des Kerbenteils 31 nacheinander in die hintereinander liegenden sägezahnförmigen Vertiefungen 39 einrasten. Unterhalb der Rastnasen 40 ist der Hohlraum 37 offen gelassen. Dadurch können die Rastnasen 40 besser federn.

Der untere Bereich des Kerbenteils 31 ist wie bei der Ausführungsform der Fig. 1 konisch zugespitzt und mit Kerben 41 versehen.

Das Ausführungsbeispiel der Fig. 3a und 3b stellt sozusagen die kinematische Umkehrung des Schnellverschlusses der Fig. 1 dar, weil bei beiden Schnellverschlüssen an Kopf- und Kerbenteil die Kerben und Nasen vertauscht sind.

Statt der hier dargestellten Verbindung von Zähnen 19 und Durchbrüchen 21 oder Vertiefungen 39 sind andere Verbindungen denkbar, die ein Ineinanderschieben der beiden Teile 10 und 11 ermöglichen aber ein späteres Auseinanderziehen verhindern. So wäre es denkbar, daß statt der Durchbrüche 21 einfach eine rauhe Oberfläche an der Innenseite des Kerbenteil 10 vorgesehen wäre in der sich die Zähne verhaken. Sowohl der Schaft 17 als auch der Hohlraum 20 könnten Sägezahn-Gewindeabschnitte aufweisen, wobei jedoch die Querschnitte von Schaft 17 und Hohlraum 20 gewährleisten müssen, daß beide Teile nicht gegeneinander verdrehbar sind. Kopfteil 11 und Kerbenteil 10 könnten auch so ausgebildet sein, daß der Schaft des Kopfteiles über das Kerbenteil gesteckt wird.

Die Bolzenteile 10 und 11 oder 31 und 32 bestehen vorzugsweise aus Kunststoff, z. B. Polyäthylen. Kunststoff hat den Vorteil der einfachen Herstellung durch Spritzen, außerdem erleichtert es wegen seiner Elastizität das Ineinanderschieben von Kopfteil 11 und Kerbenteil 10.

## Patentansprüche

1. Schnellverschluß zum Verbinden von mit Bohrungen (3, 4) versehenen Teilen (1, 2), der aus einem Bolzen mit Kerben (12) und einer Haltefeder (5) besteht, wobei die Verbindung dadurch hergestellbar ist, daß die Kerben (12) des Bolzens in die federnden Enden der Haltefeder (5) eingeschoben und die Verbindung dadurch lösbar ist, daß der Bolzen gedreht wird, **dadurch gekennzeichnet**, daß der Bolzen aus zwei gegeneinander unverdrehbar ineinander gesteckten Teilen (Kerbenteil (10), Kopfteil (11)) besteht, die wenigstens an einem Teil ihrer Berührungsflächen derart ausgebildet sind, daß zwar ein Ineinanderschieben möglich, ein Auseinanderziehen aber nicht mehr möglich ist.

2. Schnellverschluß nach Anspruch 1, dadurch gekennzeichnet und daß die Parameter derart gewählt sind, daß das Ineinanderschieben von Kerbenteil (10) und Kopfteil (11) mehr Kraft erfordert als das Einschieben des Kerbenteils (10) in die Haltefeder (5).

3. Schnellverschluß nach Anspruch 1 oder 2, dadurch gekennzeichnet, daß das Kopfteil (11) aus einem Kopf (16) zum Einsetzen und Drehen des Schnellverschlusses und einem Schaft (17) besteht, der in einen Hohlraum (20) des Kerbenteils (10) eingeschoben ist.

4. Schnellverschluß nach Anspruch 3, dadurch gekennzeichnet, daß der Schaft (17) des Kopfteils (11) in zwei Fingern 18 ausläuft, an deren Enden in Einschiebrichtung abgeschrägte Zähne (19) angebracht sind und daß der Hohlraum (20) des Kerbenteils (10) mit der Stellung der Zähne (18) entsprechenden Rastöffnungen (21) versehen ist.

5. Schnellverschluß nach Anspruch 3, dadurch gekennzeichnet, daß der Schaft (17) des Kopfteils (11) und das Kerbenteil (10) an einem Teil der Berührungsflächen Gewindeabschnitte aufweisen und daß die Windungen Sägezahnprofil aufweisen.

6. Schnellverschluß nach Anspruch 3, dadurch gekennzeichnet, daß der Schaft (34) des Kopfteils (32) entlang zweier sich diametral gegenüberliegenden Mantelflächen mehrere hintereinanderliegende sägezahnförmige Vertiefungen (39) aufweist und daß das offene Ende des Hohlraums (37) des Kerbenteils (31) an den Vertiefungen entsprechenden Stellen zwei nach innen ragende sägezahnförmige Rastnasen (40) aufweist.

7. Schnellverschluß nach Anspruch 6, dadurch gekennzeichnet, daß das Kerbenteil (31) im Bereich der Öffnung zu einem Rand (38) erweitert ist an dessen Unterkante die sägezahnförmigen Rastnasen (40) angeordnet sind und daß die Bereiche unterhalb der sägezahnförmigen Rastnasen (40) offen sind.

8. Schnellverschluß nach einem der Ansprüche 1 - 7, dadurch gekennzeichnet, daß die Querschnitte des Schaftes (17) des Kopfteiles (16) und des Hohlraumes (20) im Kerbenteil (10) von der Kreisform abweichen, vorzugsweise O-förmig sind.

9. Schnellverschluß nach einem der Ansprüche 1 - 7, dadurch gekennzeichnet, daß die Querschnitte des Schaftes (34) des Kopfteiles (32) und des Hohlraumes (37) im Kerbenteil (31) um gegenseitiges Verdrehen zu verhindern ineinanderpassende Längsnuten/Längsstege (35,36) aufweisen.

10. Schnellverschluß nach einem der Ansprüche 1 - 9, dadurch gekennzeichnet, daß Kopfteil (11) und Kerbenteil (10) aus Kunststoff, vorzugsweise Polyäthylen bestehen.

11. Schnellverschluß nach einem der Ansprüche 1 - 11, dadurch gekennzeichnet, daß der Kopf (16) des Kopfteiles (11) mit einem Schlitz zum Ansetzen eines Schraubendrehers versehen ist.

12. Schnellverschluß nach einem der Ansprüche 1 - 11, dadurch gekennzeichnet, daß der Kopf (16) des Kopfteiles (11) mit einer Rändelung und/oder aufgerauhten Oberfläche versehen ist.

13. Schnellverschluß nach einem der Ansprüche 1 - 12, dadurch gekennzeichnet, daß das Kopfteil (11) eine durchgehende zentrale Bohrung aufweist, durch die hindurch mittels eines Schraubendrehers eine Kraft zum Einsetzen des Kerbenteils (10) bis zum oberen Bereich 6 der Haltefeder 5 ausgeübt werden kann.

14. Schnellverschluß nach einem der Ansprüche 1 - 13, dadurch gekennzeichnet, das Kerbenteil (10) am Umfang eine Verbreiterung, z.B. zwei diametral gegenüberliegende Nasen (25) aufweist, die das Einschieben des Kerbenteils (10) in die Haltefeder (5) begrenzen.

15. Schnellverschluß nach einem der Ansprüche 1 - 14, dadurch gekennzeichnet, daß um den aus Kerbenteil (10) und Kopfteil (11) bestehenden Bolzen vor Aufsetzen des oberen zu verbindenden Teils (Platte (2)) ein Gummiring (26) gelegt ist.

16. Verfahren zur Montage des Schnellverschlusses nach einem der Ansprüche 1 - 15, dadurch gekennzeichnet, daß das Kerbenteil (10) und das Kopfteil (11) vor dem Verbinden des ersten und zweiten Teiles (Platten (1)und (2)) durch Einsetzen in die Haltefeder (5) in ihrer äußersten Stellung zusammengesteckt werden.

17. Verfahren zur Montage des Schnellverschlusses nach einem der Ansprüche 1 - 15, dadurch gekennzeichnet, daß das Kerbenteil (10) in die Haltefeder (5) und das erste Teil (Platte (1)) eingesetzt, danach das zweite Teil (Platte (2)) auf das Kerbenteil (10) und schließlich das Kopfteil (11) in das Kerbenteil (10) eingesetzt werden.
